# EUROPÄISCHE PATENTSCHRIFT

(11) **EP 1 077 203 B1**
(45) Veröffentlichungstag und Bekanntmachung des Hinweises auf die Patenterteilung: **20.08.2003**
(21) Anmeldenummer: 99115178.8
(22) Anmeldetag: 16.08.1999
(51) Int. Cl.: C03C 17/34, C03C 17/36

(54) **Beschichtetes Substrat und Verfahren zur Beschichtung eines Substrats**
Coated substrate and method for coating a substrate
Substrat revêtu et méthode de revêtement d'un substrat

(43) Veröffentlichungstag der Anmeldung: 21.02.2001
(73) Patentinhaber: H.R. Glass Coatings B.V., 5900 AA Venlo (NL)
(72) Erfinder: Villari, Valentino, 41372 Niederkrüchten (DE)
(74) Vertreter: Jostarndt, Hans-Dieter, Dr. Dipl.-Phys.

(56) Entgegenhaltungen:
- DE-A- 3 942 990
- US-A- 5 085 926
- US-A- 5 279 722

## Beschreibung

Die Erfindung betrifft ein Substrat mit einem Schichtsystem aus mehreren Schichten.

Die Erfindung betrifft ferner ein Verfahren zum Beschichten eines Substrats.

Beschichtete Substrate finden in weiten Technologiegebieten Anwendung. Die Beschichtungen dienen dazu, die optischen und/oder chemischen oder mechanischen Eigenschaften von Substraten zu verbessern.

Die Erfindung bezieht sich insbesondere auf transparente Substrate, die mit einem wenigstens teilweise lichtdurchlässigen Schichtsystem versehen sind.

Bei transparenten Substraten kann es sich beispielsweise um Scheiben aus Kunststoff oder aus Glas handeln. Der Begriff Glas ist hier in einer allgemeinen Bedeutung gemeint und umfaßt auch glasartige Materialien wie vitrokristalline Stoffe.

Es ist bekannt, durch geeignete Auswahl der Mehrfachschichten eine geringe Emissionsfähigkeit und/oder gewünschte Transmissions- und/oder Reflektionswerte des beschichteten Substrats zu erzielen. Hierdurch können beispielsweise Wärmeverluste in mit derartigen Substraten versehenen Räumen vermindert werden oder ein Zutritt von Sonnenwärme zu den Räumen verringert werden, während die Lichtdurchlässigkeit in beiden Richtungen nur wenig behindert wird.

Zur Erzielung von gewünschten optischen Eigenschaften wird üblicherweise wenigstens eine Schicht aus einem reflektierenden Material, insbesondere aus Silber, eingesetzt. Die Schicht aus reflektierendem Material ist ausreichend dünn, um Durchlässigkeit für die meisten Strahlen im sichtbaren Bereich des Spektrums zuzulassen, während der größte Teil von Infrarotstrahlung reflektiert wird.

Es sind verschiedene Schichten bekannt, um die Schicht aus reflektierendem Material vor chemischer oder mechanischer Einwirkung zu schützen.

Die zusätzlichen Schichten schützen die reflektierende Schicht physikalisch gegen Abrieb und chemisch gegen Korrosion.

Ein gattungsgemäßes Substrat ist aus der Deutschen Offenlegungsschrift DE 39 41 027 A1 bekannt. Bei diesem beschichteten Substrat ist oberhalb der Glasscheibe eine Schicht aus Titandioxid, eine weitere Schicht aus Zinnoxid und eine weitere Schicht aus Titandioxid angeordnet.

Die bekannten Schichtsysteme weisen den Nachteil auf, daß die Farbwerte im L*,a*,b*-System ungünstig sind. Außerdem ist die Kratzfestigkeit nicht gewährleistet. Beispielsweise treten im Taber-Test, bei dem der Abrieb der Oberflächenbeschichtung gemessen wird, auf den Proben durchgehende Kratzer auf, wenn sie in einem Testgerät, das 2 sich drehende Scheiben enthält, die mit Schleifpapier bedeckt sind, einer Belastung von 20 g entsprechend DIN Norm 53799 ausgesetzt sind.

Der Erfindung liegt die Aufgabe zugrunde, ein Schichtsystem mit günstigen optischen Parametern zu finden, das eine möglichst hohe Kratzfestigkeit aufweist.

Erfindungsgemäß wird diese Aufgabe dadurch gelöst, daß ein gattungsgemäßes Substrat so gestaltet wird, daß das Schichtsystem drei übereinander angeordnete Schichten enthält, wobei die erste der drei Schichten im wesentlichen aus NiCrₓO_{y} (mit x = 2-4 und y = 3-6) besteht, die zweite Schicht im wesentlichen aus einem dielektrischen Material und die dritte Schicht im wesentlichen aus SiOₓN_{y} (mit x = 1-3 und y = 2-4) besteht.

Die Erfindung sieht ferner vor, wenigstens eine Schicht eines Schichtsystems aus NiCrₓO_{y} und eine andere Schicht aus SiOₓN_{y} zu gestalten. Außerdem enthält die Beschichtung wenigstens eine dielektrische Schicht.

Vorzugsweise ist die dielektrische Schicht zwischen der im wesentlichen aus NiCrₓO_{y} und der im wesentlichen aus SiOₓN_{y} bestehenden Schicht angeordnet.

Erfindungsgemäß wird ferner ein gattungsgemäßes Verfahren so durchgeführt, daß auf das Substrat mehrere Schichten aufgebracht werden, wobei wenigstens drei Schichten folgende Zusammensetzung aufweisen:
1. Schicht: NiCrₓO_{y} (mit x = 2-4 und y = 3-6)
2. Schicht: dielektrisches Material
3. Schicht: SiOₓN_{y} (mit x = 1-3 und y = 2-4).

Eine bevorzugte Ausgestaltung des Substrats und/oder des Verfahrens zeichnet sich dadurch aus, daß die drei Schichten sich unmittelbar übereinander befinden.

Es ist zweckmäßig, das Substrat so zu gestalten und/oder das Verfahren so durchzuführen, daß die erste Schicht dem Substrat am nächsten liegt.

Eine bevorzugte Ausgestaltung des Substrats und/oder des Verfahrens zeichnet sich dadurch aus, daß die drei Schichten sich oberhalb einer im wesentlichen aus Silber bestehenden Schicht befinden.

Hierbei ist es bevorzugt, daß sich unterhalb der Silberschicht eine Unterschicht aus einem dielektrischen Material befindet.

Bei dem dielektrischen Material handelt es sich insbesondere um ein Metalloxid, wobei Zinkoxid (ZnO) besonders vorteilhaft ist.

Es ist zweckmäßig, das Substrat so zu gestalten und/oder das Verfahren so durchzuführen, daß sich unterhalb der Unterschicht eine weitere Schicht befindet.

Vorzugsweise besteht die Schicht unterhalb der Unterschicht ebenfalls aus einem dielektrischen Material. Als Material für die Schicht unterhalb der Unterschicht eignet sich Zinnoxid (SnO₂) besonders.

Eine bevorzugte Ausgestaltung des Substrats und/oder des Verfahrens zeichnet sich dadurch aus, daß sich oberhalb der Schutzschichten eine metallische Schicht befindet.

Eine besonders gute chemische Beständigkeit läßt sich dadurch erzielen, daß die metallische Schicht aus einer Legierung besteht, die wenigstens zwei Legierungsbestandteile aus der Gruppe Zn, Sn, Al enthält.

Beispielsweise enthält die metallische Schicht eine Sn/Zn/Al-Legierung mit einem bevorzugten Verhältnis 35%/60%/5%, aber auch andere Legierungsverhältnisse erwiesen sich als gleichfalls vorteilhaft, wie z.B. 30%/68%/2%.

Es ist zweckmäßig, das Substrat so zu gestalten und/oder das Verfahren so durchzuführen, daß sich oberhalb der metallischen Schicht eine Deckschicht ("top coating") befindet.

Zur weiteren Verbesserung der Kratzfestigkeit ist es zweckmäßig, daß die Deckschicht im wesentlichen die gleiche chemische Zusammensetzung aufweist wie eine der metallischen Schicht am nächsten liegende Schutzschicht.

Es hat sich besonders bewährt, daß die Deckschicht im wesentlichen aus SiOₓN_{y} oder TiO₂ oder Si₃N₄ besteht.

Besonders vorteilhafte optische Eigenschaften lassen sich dadurch erzielen, daß die SiOₓN_{y} enthaltende Schutzschicht eine Dicke zwischen 2 nm und 20 nm, insbesondere 5 nm bis 15 nm aufweist.

Eine weitere Verbesserung der optischen Eigenschaften läßt sich dadurch erzielen, daß die Deckschicht eine Dicke zwischen 2 nm und 15 nm, insbesondere zwischen 3 nm und 10 nm, aufweist.

Eine bevorzugte Ausgestaltung des Substrats und/oder des Verfahrens zeichnet sich dadurch aus, daß wenigstens eine der Schichten mit Kathodenzerstäubung aufgebracht wird.

Hohe Abscheideraten und gleichmäßige Schichtdicken lassen sich dadurch erzielen, daß die Kathodenzerstäubung durch wenigstens ein Magnetfeld unterstützt wird.

Es ist zweckmäßig, das Substrat so zu gestalten und/oder das Verfahren so durchzuführen, daß das Magnetfeld eine Frequenz zwischen 30 und 40 kHz aufweist.

Eine bevorzugte Ausgestaltung des Substrats und/oder des Verfahrens zeichnet sich dadurch aus, daß die Magnetfeldunterstützung über eine Twin-Mag-Anordnung erfolgt.

Es ist zweckmäßig, das Substrat so zu gestalten und/oder das Verfahren so durchzuführen, daß wenigstens eine Kathode während des Zerstäubens rotiert.

Die Wahl einer Frequenz zwischen 30 und 40 kHz, eine Twin-Mag-Anordnung und/oder eine Rotation der Kathode sind zum Aufbringen der SiOₓN_{y}-Schichten besonders geeignet.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Zeichnungen.

Die Zeichnung zeigt ein Substrat mit einem Beschichtungssystem mit einem ersten Schichtaufbau.

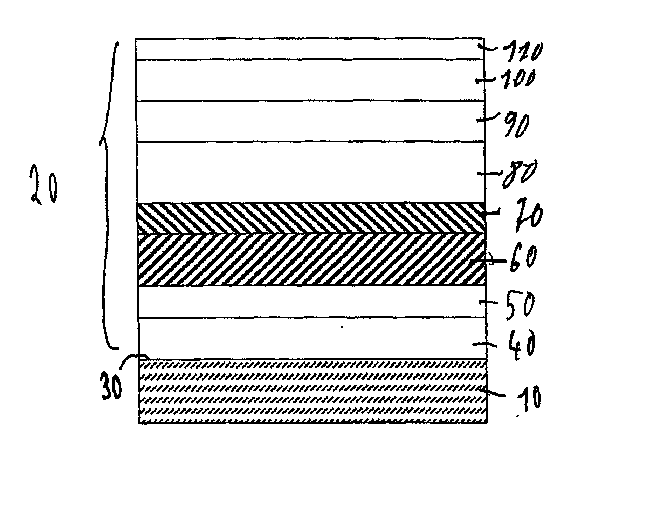

Die Fig. 1 zeigt in einer senkrecht zur Substratoberfläche gestreckten Darstellung ein Substrat 10, insbesondere aus einem transparenten Material wie Glas und ein darauf angeordnetes Schichtsystem 20.

Das Schichtsystem 20 weist 8 Schichten auf.

Auf einer dem Schichtsystem 20 zugewandten Oberfläche 30 des Substrats 10 befindet sich eine erste Schicht 40 aus einem dielektrischen Material, insbesondere aus einem Metalloxid, vorzugsweise aus SnO₂. Die erste Schicht 40 weist eine Dicke von 15 nm bis 30 nm auf.

Auf der ersten Schicht 40 befindet sich eine Unterschicht 50 aus einem dielektrischen Material, insbesondere aus einem Metalloxid, vorzugsweise aus ZnO. Die Unterschicht 50 weist eine Dicke von 2 nm bis 10 nm auf. Bei einer Herstellung mit Mittelfrequenz-Sputtern, Twin-Mag-Sputtern oder bei Sputtern mit einer Rotationskathode kann die Dicke der Unterschicht 50 möglichst gering gewählt werden.

Auf der Unterschicht 50 befindet sich eine metallische Schicht 60, die vorzugsweise im wesentlichen aus Silber besteht. Die metallische Schicht 60 weist eine bevorzugte Dicke von 8 nm bis 16 nm auf.

Auf der metallischen Schicht 60, befindet sich eine erste Schutzschicht 70, vorzugsweise aus Metalloxiden, insbesondere aus NiCrₓO_{y} mit 2 ≤ x ≤ 4 und 3 ≤ y ≤ 6.

Die Schutzschicht 70 weist eine Dicke von vorzugsweise 1 nm bis 6 nm auf.

Auf der ersten Schutzschicht 70 befindet sich eine Haftvermittlerschicht 80. Die Haftvermittlerschicht 80 besteht vorzugsweise aus einem dielektrischen Material wie einem Metalloxid oder Si₃N₄. Bevorzugte Metalloxide sind ZnO₂ beziehungsweise SnO₂, wobei die nachfolgenden Meßwerte sich auf den Fall beziehen, daß die Haftvermittlerschicht im wesentlichen aus SnO₂ besteht. Die Haftvermittlerschicht kann verschiedene Dicken aufweisen, die von 2 nm bis 50 nm reichen. Im dargestellten, besonders bevorzugten, Fall weist die Haftvermittlerschicht 80 eine Dicke zwischen 20 nm und 25 nm auf.

Auf der Haftvermittlerschicht 80 befindet sich eine weitere Schutzschicht 90. Vorzugsweise besteht die Schutzschicht 90 aus SiOₓN_{y}. Eine bevorzugte Dicke der Schutzschicht 90 beträgt zwischen 5 nm und 15 nm.

Oberhalb der Schutzschicht 90 befindet sich eine metallische Schicht 100, insbesondere aus einer Metallegierung, wobei die Metallegierung vorzugsweise wenigstens zwei Legierungsbestandteile aus der Gruppe Sn, Zn, Al aufweist. Die Schicht 100 weist vorzugsweise eine Dicke von weniger als 20 nm auf, wobei Werte zwischen 2 nm und 15 nm, insbesondere zwischen 5 nm und 15 nm bevorzugt sind.

Eine weitere Erhöhung der Kratzfestigkeit läßt sich dadurch erzielen, daß sich oberhalb der metallischen Schicht 100 eine Deckschicht 110 befindet. Die Deckschicht 110 besteht in einer zweckmäßigen Ausführungsform aus SiOₓN_{y}, TiO₂ oder Si₃N₄. In dem dargestellten, vorteilhaften Fall besteht die Deckschicht 110 aus SiOₓN_{y} in einer bevorzugten Dicke, zwischen 3 nm und 10 nm, wobei Werte von etwa 5 nm zweckmäßig sind.

Weitere Beispiele für die Zusammensetzung besonders vorteilhafter Schichtsysteme sind, jeweils beginnend auf einem Glassubstrat:
a.) eine Schicht SnO₂ mit einer bevorzugten Dicke von 30 nm, eine Schicht ZnO mit einer vorteilhaften Dicke von 5 nm, eine Schicht Ag mit einer bevorzugten Dicke von 13 nm, eine Schicht NiCrₓO_{y} mit einer vorteilhaften Dicke von 5 nm, eine Schicht SnO2 mit einer bevorzugten Dicke von 20 nm, eine Schicht SiOₓN_{y} mit einer vorteilhaften Dicke von 8 nm, eine Schicht Zn:Sn:Al mit einer bevorzugten Dicke von 10 nm und eine Schicht SiOₓN_{y} mit einer vorteilhaften Dicke von 8 nm
b.) eine Schicht SnO₂ mit einer bevorzugten Dicke von 32 nm, eine Schicht ZnO mit einer vorteilhaften Dicke von 3 nm, eine Schicht Ag mit einer bevorzugten Dicke von 13 nm, eine Schicht NiCrₓO_{y} mit einer vorteilhaften Dicke von 5 nm, eine Schicht Si₃N₄ mit einer bevorzugten Dicke von 20 nm, eine Schicht SiOₓN_{y} mit einer vorteilhaften Dicke von 10 nm, eine Schicht Zn:Sn:Al mit einer bevorzugten Dicke von 10 nm und eine Schicht TiO₂ mit einer vorteilhaften Dicke von 5 nm
c.) eine Schicht SnO₂ mit einer bevorzugten Dicke von 33 nm, eine Schicht ZnO mit einer vorteilhaften Dicke von 4 nm, eine Schicht Ag mit einer bevorzugten Dicke von 13 nm, eine Schicht NiCrₓO_{y} mit einer vorteilhaften Dicke von 5 nm, eine Schicht ZnO mit einer bevorzugten Dicke von 20 nm, eine Schicht SiOₓN_{y} mit einer vorteilhaften Dicke von 10 nm, eine Schicht Zn:Sn:Al mit einer bevorzugten Dicke von 10 nm und eine Schicht Si₃N₄ mit einer vorteilhaften Dicke von 6 nm
d.) eine Schicht SnO₂ mit einer bevorzugten Dicke von 33 nm, eine Schicht ZnO mit einer vorteilhaften Dicke von 4 nm, eine Schicht Ag mit einer bevorzugten Dicke von 13 nm, eine Schicht NiCrₓO_{y} mit einer vorteilhaften Dicke von 5 nm, eine Schicht SnO₂ mit einer bevorzugten Dicke von 20 nm, eine Schicht SiOₓN_{y} mit einer vorteilhaften Dicke von 8 nm, eine Schicht Zn:Sn:Al mit einer bevorzugten Dicke von 10 nm und eine Schicht TiO₂ mit einer vorteilhaften Dicke von 5 nm
e.) eine Schicht SnO₂ mit einer bevorzugten Dicke von 33 nm, eine Schicht ZnO mit einer vorteilhaften Dicke von 4 nm, eine Schicht Ag mit einer bevorzugten Dicke von 13 nm, eine Schicht NiCrₓO_{y} mit einer vorteilhaften Dicke von 5 nm, eine Schicht SnO₂ mit einer bevorzugten Dicke von 20 nm, eine Schicht SiOₓN_{y} mit einer vorteilhaften Dicke von 8 nm, eine Schicht Zn:Sn mit einer bevorzugten Dicke von 10 nm und eine Schicht TiO₂ mit einer bevorzugten Dicke von 8 nm.

### Bezugszeichenliste

- 10: Substrat
- 20: Schichtsystem
- 30: Oberfläche
- 40: erste Schicht
- 50: Unterschicht
- 60: metallische Schicht
- 70: Schutzschicht
- 80: Haftvermittlerschicht
- 90: Schutzschicht
- 100: metallische Schicht
- 110: Deckschicht

## Patentansprüche

1. Substrat mit einem Schichtsystem aus mehreren **Schichten, dadurch gekennzeichnet, daß** das Schichtsystem drei übereinander angeordnete Schichten enthält, wobei die erste der drei Schichten im wesentlichen aus NiCrₓO_{y} (mit x = 2-4 und y = 3-6) besteht, die zweite Schicht im wesentlichen aus einem dielektrischen Material und die dritte Schicht im wesentlichen aus SiOₓN_{y} (mit x = 1-3 und y = 2-4) besteht.

2. Substrat nach Anspruch 1, **dadurch gekennzeichnet, daß** die drei Schichten sich unmittelbar übereinander befinden.

3. Substrat nach einem oder mehreren der Ansprüche 1 oder 2, **dadurch gekennzeichnet, daß** die erste Schicht dem Substrat am nächsten liegt.

4. Substrat nach einem oder mehreren der Ansprüche 1 bis 3, **dadurch gekennzeichnet, daß** die drei Schichten sich oberhalb einer im wesentlichen aus Silber bestehenden Schicht befinden.

5. Substrat nach Anspruch 4, **dadurch gekennzeichnet, daß** sich unterhalb der Silberschicht eine Unterschicht aus einem dielektrischen Material befindet.

6. Substrat nach Anspruch 5, **dadurch gekennzeichnet, daß** sich unterhalb der Unterschicht eine weitere Schicht befindet.

7. Substrat nach einem oder mehreren der Ansprüche 1 bis 6, **dadurch gekennzeichnet, daß** sich oberhalb der Schutzschichten eine metallische Schicht befindet.

8. Substrat nach Anspruch 7, **dadurch gekennzeichnet, daß** die metallische Schicht aus einer Legierung besteht, die wenigstens zwei Legierungsbestandteile aus der Gruppe Zn, Sn, Al enthält.

9. Substrat nach einem oder mehreren der Ansprüche 1 oder 7, **dadurch gekennzeichnet, daß** sich oberhalb der metallischen Schicht eine Deckschicht befindet.

10. Substrat nach Anspruch 9, **dadurch gekennzeichnet, daß** die Deckschicht im wesentlichen die gleiche chemische Zusammensetzung aufweist wie eine der metallischen Schicht am nächsten liegende Schutzschicht.

11. Substrat nach einem oder mehreren der Ansprüche 9 oder 10, **dadurch gekenn** **zeichnet**, daß die Deckschicht im wesentlichen aus SiOₓN_{y} oder TiO₂ oder Si₃N₄ besteht.

12. Substrat nach einem oder mehreren der Ansprüche 1 bis 11, **dadurch gekennzeichnet, daß** die SiOₓN_{y} enthaltende Schutzschicht eine Dicke zwischen 2 nm und 20 nm, insbesondere 5 nm bis 15, nm aufweist.

13. Substrat nach einem oder mehreren der Ansprüche 11 oder 12, **dadurch gekennzeichnet, daß** die Deckschicht eine Dicke zwischen 2 nm und 15 nm, insbesondere zwischen 3 nm und 10 nm aufweist.

14. Verfahren zum Beschichten eines Substrats, **dadurch gekennzeichnet, daß** auf das Substrat mehrere Schichten aufgebracht werden, wobei wenigstens drei Schichten folgende Zusammensetzung aufweisen:
1. Schicht: NiCrₓO_{y} (mit x = 2-4 und y = 3-6)
2. Schicht: dielektrisches Material
3. Schicht: SiOₓN_{y} (mit x = 1-3 und y = 2-4)

15. Verfahren nach Anspruch 14, **dadurch gekennzeichnet, daß** wenigstens eine der Schichten mit Kathodenzerstäubung aufgebracht wird.

16. Verfahren nach Anspruch 15, **dadurch gekennzeichnet, daß** die Kathodenzerstäubung durch wenigstens ein Magnetfeld unterstützt wird.

17. Verfahren nach Anspruch 16, **dadurch gekennzeichnet, daß** das Magnetfeld eine Frequenz zwischen 30 und 40 kHz aufweist.

18. Verfahren nach einem oder mehreren der Ansprüche 16 oder 17, **dadurch gekennzeichnet, daß** die Magnetfeldunterstützung über eine Twin-Mag-Anordnung erfolgt.

19. Verfahren nach einem oder mehreren der Ansprüche 15 bis 18, **dadurch gekennzeichnet, daß** wenigstens eine Kathode während des Zerstäubens rotiert.

## Claims

1. A substrate with a layer system consisting of several layers, **characterized in that** the layer system comprises three layers arranged above one another, whereby the first of the three layers consists essentially of NiCrₓO_{y} (wherein x = 2-4 and y = 3-6), the second layer consists essentially of a dielectric material and the third layer consists essentially of SiOₓN_{y} (wherein x = 1-3 and y = 2-4).

2. The substrate according to Claim 1, **characterized in that** the three layers are situated directly above one another.

3. The substrate according to one or more of Claims 1 or 2, **characterized in that** the first layer is closest to the substrate.

4. The substrate according to one or more of Claims 1 to 3, **characterized in that** the three layers are situated above a layer consisting essentially of silver.

5. The substrate according to Claim 4, **characterized in that,** underneath the silver layer, there is a sub-layer consisting of a dielectric material.

6. The substrate according to Claim 5, **characterized in that** there is another layer underneath the sub-layer.

7. The substrate according to one or more of Claims 1 to 6, **characterized in that** there is a metallic layer above the protective layers.

8. The substrate according to Claim 7, **characterized in that** the metallic layer consists of an alloy that contains at least two alloy components from the group of Zn, Sn, Al.

9. The substrate according to one or more of Claims 1 or 7, **characterized in that** there is a cover layer above the metallic layer.

10. The substrate according to Claim 9, **characterized in that** the cover layer has essentially the same chemical composition as a protective layer that is closest to the metallic layer.

11. The substrate according to one or more of Claims 9 or 10, **characterized in that** the cover layer consists essentially of SiOₓN_{y} or TiO₂ or Si₃N₄.

12. The substrate according to one or more of Claims 1 to 11, **characterized in that** the protective layer containing SiOₓN_{y} has a thickness between 2 nm and 20 nm, especially between 5 nm and 15 nm.

13. The substrate according to one or more of Claims 11 or 12, **characterized in that** the cover layer has a thickness between 2 nm and 15 nm, especially between 3 nm and 10 nm.

14. A process for coating a substrate, **characterized in that** several layers are applied onto the substrate, whereby at least three layers have the following composition:
1^{st} layer: NiCrₓO_{y} (wherein x = 2-4 and y = 3-6)
2^{nd} layer: dielectric material
3^{rd} layer: SiOₓN_{y} (wherein x = 1-3 and y = 2-4).

15. The process according to Claim 14, **characterized in that** at least one of the layers is applied by means of cathode sputtering.

16. The process according to Claim 15, **characterized in that** the cathode sputtering is assisted by at least one magnetic field.

17. The process according to Claim 16, **characterized in that** the magnetic field has a frequency between 30 kHz and 40 kHz.

18. The process according to one or more of Claims 16 or 17, **characterized in that** the magnetic field is assisted by a twin-mag arrangement.

19. The process according to one or more of Claims 15 to 18, **characterized in that** at least one cathode rotates during the sputtering.

## Revendications

1. Substrat comportant un système stratifié formé de plusieurs couches,
**caractérisé en ce que**
le système stratifié comporte trois couches superposées, la première des trois couches étant essentiellement formée de NiCrₓO_{y} (x = 2-4 et y = 3-6), la seconde couche étant formée essentiellement d'une matière diélectrique et la troisième couche essentiellement de SiOₓN_{y} (x = 1-3 et y = 2-4).

2. Substrat selon la revendication 1,
**caractérisé en ce que**
les trois couches sont directement superposées.

3. Substrat selon l'une ou plusieurs des revendications 1 ou 2,
**caractérisé en ce que**
la première couche est la plus proche du substrat.

4. Substrat selon l'une ou plusieurs des revendications 1 à 3,
**caractérisé en ce que**
les trois couches se trouvent au-dessus d'une couche formée principalement d'argent.

5. Substrat selon la revendication 4,
**caractérisé en ce que**
sous la couche d'argent se trouve une sous-couche en une matière diélectrique.

6. Substrat selon la revendication 5,
**caractérisé en ce que**
sous la sous-couche se trouve une autre couche.

7. Substrat selon l'une ou plusieurs des revendications 1 à 6,
**caractérisé en ce qu'**
au-dessus des couches de protection il y a une couche métallique.

8. Substrat selon la revendication 7,
**caractérisé en ce que**
la couche métallique est formée d'un alliage ayant au moins deux composants d'alliage du groupe formé de Zn, Sn, Al.

9. Substrat selon l'une ou plusieurs des revendications 1 ou 7,
**caractérisé en ce qu'**
une couche de recouvrement est prévue au-dessus de la couche métallique.

10. Substrat selon la revendication 9,
**caractérisé en ce que**
la couche de recouvrement présente essentiellement la même composition chimique que l'une des couches métalliques la plus proche de la couche de protection.

11. Substrat selon l'une ou plusieurs des revendications 9 ou 10,
**caractérisé en ce que**
la couche de recouvrement est formée principalement de SiOₓN_{y} ou TiO₂ ou Si₃N₄.

12. Substrat selon l'une ou plusieurs des revendications 1 à 11,
**caractérisé en ce que**
la couche de protection contenant SiOₓN_{y} a une épaisseur comprise entre 2 nm et 20 nm, notamment de 5 nm jusqu'à 15 nm.

13. Substrat selon l'une ou plusieurs des revendications 11 ou 12,
**caractérisé en ce que**
la couche de recouvrement a une épaisseur comprise entre 2 nm et 15 nm, notamment entre 3 nm et 10 nm.

14. Procédé de revêtement d'un substrat,
**caractérisé en ce que**
plusieurs couches sont appliquées sur le substrat et au moins trois couches ont la composition suivante :
- première couche : NiCrₓO_{y} (x = 2-4 et y = 3-6)
- deuxième couche : matière diétlectrique
- troisième couche : SiOₓN_{y} (x = 1-3 et y = 2-4).

15. Procédé selon la revendication 14,
**caractérisé en ce qu'**
au moins l'une des couches est appliquée par pulvérisation cathodique.

16. Procédé selon la revendication 15,
**caractérisé en ce que**
la pulvérisation cathodique est assistée par au moins un champ magnétique.

17. Procédé selon la revendication 16,
**caractérisé en ce que**
le champ magnétique a une fréquence comprise entre 30 et 40 kHz.

18. Procédé selon l'une ou plusieurs des revendications 16 ou 17,
**caractérisé en ce que**
l'assistance par champ magnétique se fait par un dispositif Twin-Mag.

19. Procédé selon l'une ou plusieurs des revendications 15 à 18,
**caractérisé en ce qu'**
au moins une cathode tourne pendant la pulvérisation.
